# DEMANDE DE BREVET EUROPEEN

(11) **EP 1 209 881 A1**
(43) Date de publication de la demande: **29.05.2002**
(21) Numéro de dépôt: 01403000.1
(22) Date de dépôt: 22.11.2001
(51) Int. Cl.: H04M 1/05

(54) **Combiné telephonique pivotable et coulissant**

(30) Priorité: 24.11.2000 FR 0015182
(71) Demandeur: Churchill Trading, 9004-521 Funchal Madeira (PT)
(72) Inventeur: Smadja, David, 3963 Crans sur Sierre (CH); Bazire, Bruno, 06530 Peymeinade (FR)
(74) Mandataire: Puiroux, Guy

(57) **Abrégé**

La présente invention concerne un combiné, notamment téléphonique, du type comportant un élément de maintien relié au boîtier (1) par au moins une branche (5) escamotable par coulissement dans celui-ci.

Ce combiné est caractérisé en ce que l'une des extrémités du boîtier (1) comporte un élément rotatif cylindrique (3), qui est monté à rotation, par rapport au boîtier (1) autour de son axe principal (zz') auquel la branche (5) est liée au moins en rotation.

## Description

La présente invention concerne des perfectionnements, notamment aux combinés téléphoniques de type portable, et concerne plus spécialement des moyens aptes à permettre à un utilisateur de converser facilement tout en gardant la libre disposition de ses mains.

On connaît différents dispositifs qui font appel à une ou plusieurs branches qui sont solidarisées du combiné et qui assurent le maintien en position de celui-ci sur la tête de l'utilisateur. Ces dispositifs permettent d'assurer soit la rotation d'une ou plusieurs branches entre elles soit la rotation de celles-ci par rapport au corps du combiné. On connaît également des dispositifs qui permettent d'assurer la rétraction d'une branche dans le corps du combiné.

La présente invention quant à elle a pour but de proposer un combiné pourvu de moyens permettant d'assurer deux fonctions, à savoir d'une part escamoter la ou les branches soit à l'intérieur du boîtier de ce combiné soit dans une autre branche, soit dans un élément de maintien lié au boîtier et d'autre part assurer la rotation de ces branches par rapport audit boîtier.

La présente invention a ainsi pour objet un combiné, notamment téléphonique, du type comprenant un boîtier et un élément de maintien relié à celui-ci par au moins une branche escamotable par coulissement, caractérisé en ce que l'une des extrémités du boîtier comporte un élément de rotation cylindrique, qui contrôle la rotation de ladite branche, par rapport au boîtier autour de son axe principal.

En fonction des différents modes de mise en oeuvre la branche pourra être fixée sur l'élément de rotation ou être montée à coulissement dans celui-ci.

L'élément de rotation peut quant à lui être fixe soit monté à rotation autour d'un axe réel ou autour d'un axe virtuel. Cet élément de rotation pourra ainsi être monté à rotation autour d'un axe physique, au moins lié en translation par rapport au boîtier, ou être guidé en rotation par des éléments de guidage disposés en périphérie de celui-ci. Ces éléments de guidage pourront être constitués par une zone en creux ou en relief formée sur sa périphérie et par une zone de profil complémentaire formée sur une partie du boîtier qui lui est adjacente.

Dans un mode de mise en oeuvre intéressant de l'invention le boîtier sera creusé d'un évidement longitudinal destiné à recevoir la branche lors de son introduction dans le boîtier, le rayon de courbure de la branche et celui de cet évidement ayant des valeurs différentes, de façon que la branche subisse un effort de courbure lors de son introduction dans cet évidement.

Dans un autre mode de mise en oeuvre de l'invention le combiné pourra comporter deux branches parallèles. Par ailleurs l'élément rotatif pourra être pourvu de moyens d'indexation de sa position en rotation qui pourront être constitués par la coopération d'encoches prévues sur l'élément rotatif et d'éléments élastiques prévus sur le boîtier, ou inversement.

Le dispositif suivant l'invention s'est révélé particulièrement intéressant d'une part en raison de sa simplicité de réalisation et d'autre part en raison de la grande variété des modes de mise en oeuvre qu'il permet de réaliser. Enfin il permet d'assurer un excellent maintien mécanique de la branche escamotable tout en permettant de conserver au mécanisme une très faible épaisseur.

Dans une variante de mise en oeuvre de l'invention la branche est solidaire de l'élément de rotation cylindrique et ce dernier est monté à coulissement dans une rainure prévue dans le boîtier, l'élément de rotation venant en contact, en position extractée de la branche, avec une paroi interne circulaire du boîtier qui assure son guidage au cours de la rotation.

On décrira ci-après, à titre d'exemple non limitatif, diverses formes d'exécution de la présente invention, en référence au dessin annexé sur lequel :
La figure 1 est une vue en plan partielle d'un combiné suivant l'invention en position de rétraction partielle de la branche de maintien dans le boîtier.
La figure 2 est une vue en coupe transversale du combiné représenté sur la figure 1 suivant la ligne II-II de celle-ci.
La figure 3 est une vue en coupe partielle longitudinale du combiné représenté sur la figure 1 suivant la ligne III-III de celle-ci.
La figure 4 est une vue partielle en perspective du combiné représenté sur les figures 1 à 3 en position extractée, la branche étant positionnée angulairement.
La figure 5 est une vue en coupe transversale d'un mode de mise en oeuvre de l'invention représenté sur la figure 4.
Les figures 6 et 7 sont des vues partielles en perspective d'un boîtier équipé d'une variante de mise en oeuvre d'un dispositif suivant l'invention, la branche étant respectivement représentée en position partiellement extractée et en position totalement extractée et positionnée angulairement.
La figure 8 est une vue en section droite transversale du mode de mise en oeuvre représenté sur les figures 6 et 7 suivant la ligne VIII-VIII de la figure 6.
La figure 9 est une vue schématique d'un utilisateur coiffé d'un combiné suivant un mode de mise en oeuvre de l'invention.
La figure 10 est une vue en perspective du combiné représenté sur la figure 9 et montré en position semi-déployée.
La figure 11 est une vue en perspective du combiné représenté sur les figures 9 et 10 en position de repos ou repliée.
La figure 12 est une vue partielle en perspective montrant l'élément de rotation et des branches repliables et escamotables liées à celui-ci.
La figure 13 est une vue partielle en coupe longitudinale de la branche représentée sur la figure 12 sur laquelle est monté l'élément de rotation.
La figure 14 est une vue en plan partielle d'une variante de mise en oeuvre montrant des moyens d'indexation de la position angulaire de la branche.
La figure 15 est une vue en section droite partielle du boîtier d'un combiné suivant l'invention montrant une forme de mise en oeuvre de la branche.
La figure 16a est une vue en perspective d'une branche et la figure 16b est une vue en perspective de cette branche disposée dans un boîtier.

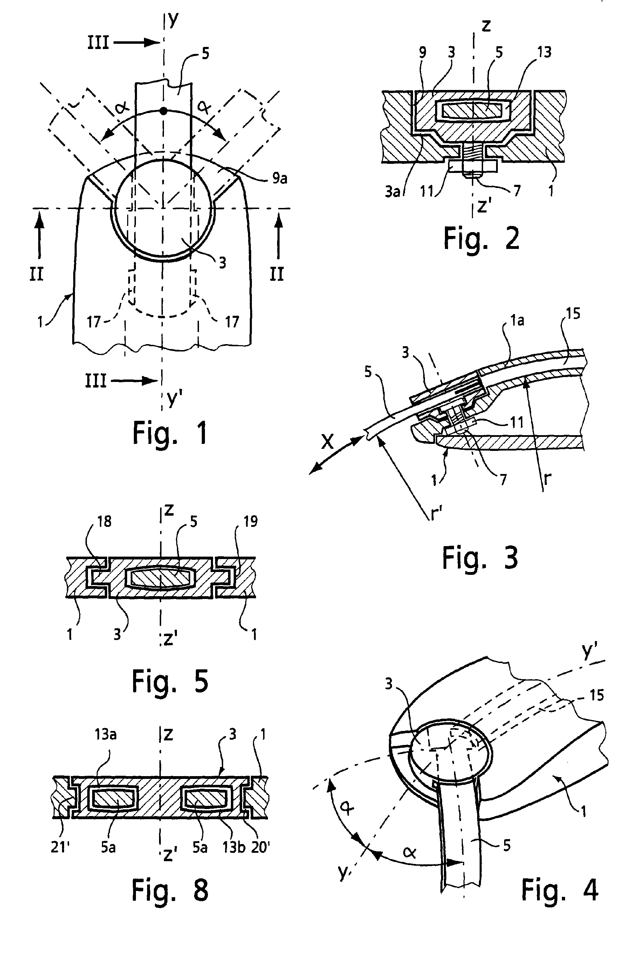

On a représenté sur les figures 1 à 4 un premier mode de mise en oeuvre de l'invention dans lequel un boîtier 1 d'un combiné téléphonique comprend à son extrémité supérieure, c'est-à-dire à celle située du côté écouteur lors de l'utilisation du combiné, un élément rotatif 3 qui est au moins solidaire en rotation d'une branche 5. Plus précisément, dans le présent mode de mise en oeuvre, l'élément rotatif 3 est traversé par la branche 5 dont l'extrémité, dite externe, qui est non représentée sur le dessin, comporte, par exemple, un élément de maintien destiné à assurer la tenue du combiné sur la tête de l'utilisateur.

L'élément rotatif 3 est constitué d'une pièce cylindrique dont la face inférieure est légèrement tronconique et dont la base 3a est pourvue, en son centre, d'un axe fileté 7. L'élément rotatif 3 est encastré dans une cavité cylindrique 9 du boîtier 1 qui comporte à sa partie supérieure, un dégagement 9a qui s'étend de part et d'autre de l'axe longitudinal yy' du boîtier 1 sur un angle α d'environ 45°.

Ainsi que représenté sur la figure 3 l'axe fileté 7 traverse la paroi supérieure 1a du boîtier 1 à laquelle elle est fixée par un élément de fixation 11 qui permet d'autoriser sa rotation autour de l'axe 7. L'élément rotatif 3 est percé, parallèlement à sa base supérieure, d'un évidement 13, de section droite rectangulaire, qui est destiné à être traversé par la branche 5 dont la section droite est de section voisine. Ainsi que représenté sur la figure 3, la paroi supérieure 1a du boîtier 1 est creusée d'un évidement axial et longitudinal 15 qui est parallèle à la face supérieure 1a et qui donc, dans le présent mode de mise en oeuvre, est légèrement bombé et possède un rayon de courbure r. Cet évidement axial 15 est destiné à recevoir la branche 5. Cette dernière sera préférentiellement constituée d'un matériau déformable et élastique dont le rayon de courbure r' sera naturellement conforme à sa forme d'origine et donc différente de celle de l'évidement longitudinal 15.

Dans ces conditions la branche 5 peut coulisser dans l'évidement 13 de l'élément rotatif 3 et, lorsqu'elle se trouve alignée avec l'évidement longitudinal 15 du boîtier 1, elle peut être reçue dans celui-ci et s'y déplacer suivant un mouvement X sur la figure 3. La différence de rayon de courbure entre l'évidement 15 et la branche 5 appliquera à cette dernière une déformation qui générera un frottement doux et progressif lors de son insertion et de son extraction de l'évidement 15. Des butées 17 disposées à l'extrémité interne de la branche 5 limitent la course d'extraction de celle-ci.

Une fois la branche 5 totalement sortie, l'élément rotatif 3 peut alors pivoter autour de son axe 7, ce qui permet à la branche 5 d'occuper une position inclinée d'un angle α de part et d'autre de l'axe longitudinal yy' du boîtier 1.

Dans une variante de mise en oeuvre de l'invention, qui est représentée sur la figure 5, l'axe de rotation de l'élément rotatif 3 est virtuel, en ce sens que si l'élément rotatif 3 est bien guidé en rotation, ce guidage n'est plus assuré par un axe central physique, mais par sa périphérie. Ainsi, sur la figure 5 cette périphérie forme un bossage circulaire 18 qui prend place dans une rainure circulaire 19, de forme complémentaire, qui est creusée dans le boîtier 1. L'élément rotatif 3 peut être visible à la partie supérieure du boîtier 1, ou au contraire être encastré dans celui-ci.

Dans une autre variante de mise en oeuvre de l'invention, qui est représentée sur les figures 6 à 8, la branche 5 est constituée de deux éléments 5a et l'élément rotatif 3 comporte alors deux évidements traversants 13a et 13b dans lesquels les éléments de branche 5a sont montés coulissants. Dans le mode de mise en oeuvre représenté sur la figure 8 le guidage en rotation de l'élément rotatif 3 est assuré par la coopération d'une rainure circulaire 20' qui est réalisée sur celle-ci et d'un bossage circulaire 21' qui est réalisé sur le boîtier 1. Bien entendu on pourrait également faire appel à tout autre moyen de guidage en rotation et notamment aux moyens représentés sur la figure 5.

Chacune des extrémités internes des éléments de branche 5a comporte une butée 17a. Les extrémités externes respectives des éléments de branche 5a sont réunies, par exemple, par une portion 22 en arc de cercle, ainsi que représenté sur la figure 6, afin d'assurer le maintien d'un moyen de rotation d'une branche secondaire 23. Comme dans les modes de mise en oeuvre précédents, une fois que la branche 5 est complètement extraite de son logement et que les butées 17a sont en contact avec l'élément rotatif 3, ce dernier peut alors tourner autour de son axe virtuel, ce qui permet à la branche 5 d'être positionnée suivant différentes positions angulaires α en fonction des besoins de l'utilisateur (figure 7).

On remarquera que dans un tel mode de mise en oeuvre de l'invention l'élément 3 peut être un élément de rotation qui est fixe par rapport au boîtier 1. Dans la mesure où celui-ci est pourvu d'une gorge interne circulaire dont la largeur est égale à celle de l'espace existant entre les deux branches, lorsque les butées 17a viendront en contact avec l'élément de rotation 3, la branche 5 pourra alors tourner autour de la gorge de l'élément de rotation 3 et occuper ainsi des positions angulaires formant des angles respectifs α avec l'axe longitudinal yy'. On comprend ainsi qu'il n'est pas nécessaire que l'élément de rotation 3 soit lui-même rotatif pour qu'il autorise la rotation des branches 5.

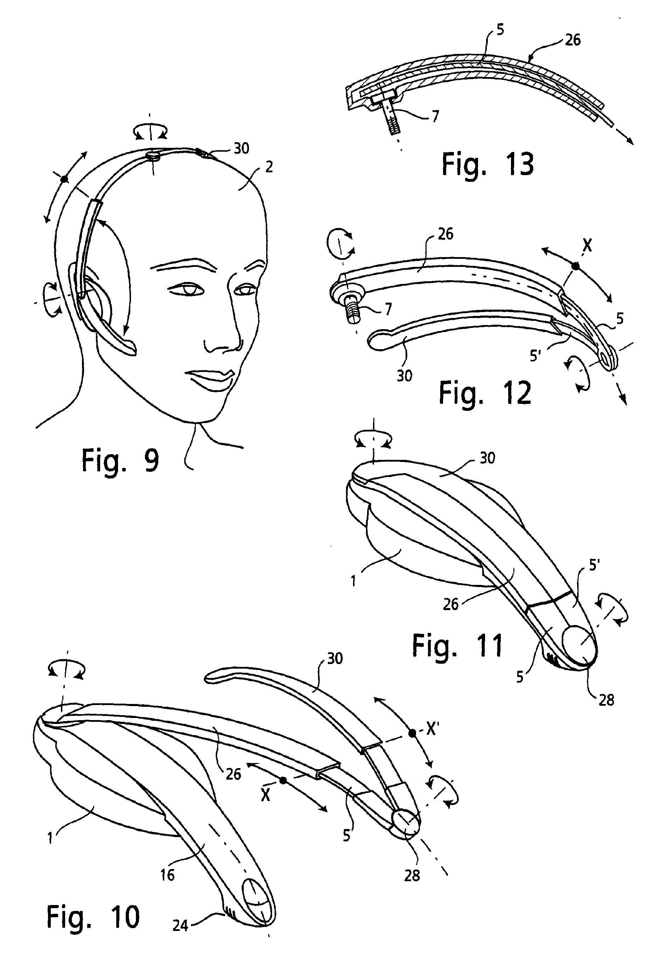

Suivant l'invention, la branche 5 peut également être creuse afin de recevoir une branche secondaire. Ainsi en est-il du mode de mise en oeuvre représenté sur les figures 9 à 13.

Sur ces figures le combiné est constitué d'un boîtier 1 qui se prolonge vers le bas, lorsqu'il est en position sur la tête d'un utilisateur 2 par une partie allongée 1b dont l'extrémité libre est pourvue d'un microphone 24. La partie opposée du boîtier 1 reçoit un fourreau 26 qui comporte un élément de rotation constitué d'une vis 7 qui est fixée sur le boîtier 1 et autour de laquelle le fourreau 26 peut tourner. Ce fourreau 26 reçoit une branche 5 qui est montée coulissante (déplacement X) à l'intérieur de celui-ci et qui se termine par une articulation 28 autour de laquelle est disposée une seconde branche 5', cette seconde branche étant elle-même montée à coulissement (déplacement X') dans un second fourreau constituant l'élément de maintien du combiné c'est-à-dire celui qui prend position sur la partie de la tête de l'utilisateur 2 opposée au boîtier 1. L'agencement des deux branches 5,5'ainsi que les moyens d'articulation 28 sont tels, qu'en position de non utilisation, ou position repliée, les deux branches 5,5' du combiné, ainsi que représenté sur la figure 11, se trouvent appliquées l'une contre l'autre dans une position parallèle.

En position d'utilisation au contraire, le fourreau 26 peut pivoter autour de l'élément rotatif constitué par la vis 7 et les branches 5 et 5' peuvent être déployées et être disposées sensiblement dans le prolongement l'une de l'autre de façon, ainsi que représenté sur la figure 9, à assurer le maintien du combiné en position sur la tête de l'utilisateur 2. Suivant les mensurations de celles-ci, les branches 5 et 5' seront plus ou moins déployées de façon à assurer un maintien correct du combiné. La rotation des branches et du fourreau par rapport au boîtier, autour de l'élément de rotation 28 permettront d'ajuster, au grès de l'utilisateur, la position angulaire relative existant entre celles-ci et la partie 1b prolongeant le boîtier 1.

Le présent dispositif est particulièrement intéressant en ce qu'il permet un ajustement et un positionnement faciles rapides et précis sur la tête de l'utilisateur 2 tout en permettant également son repliage facile en position de repos ainsi que représenté sur la figure 11.

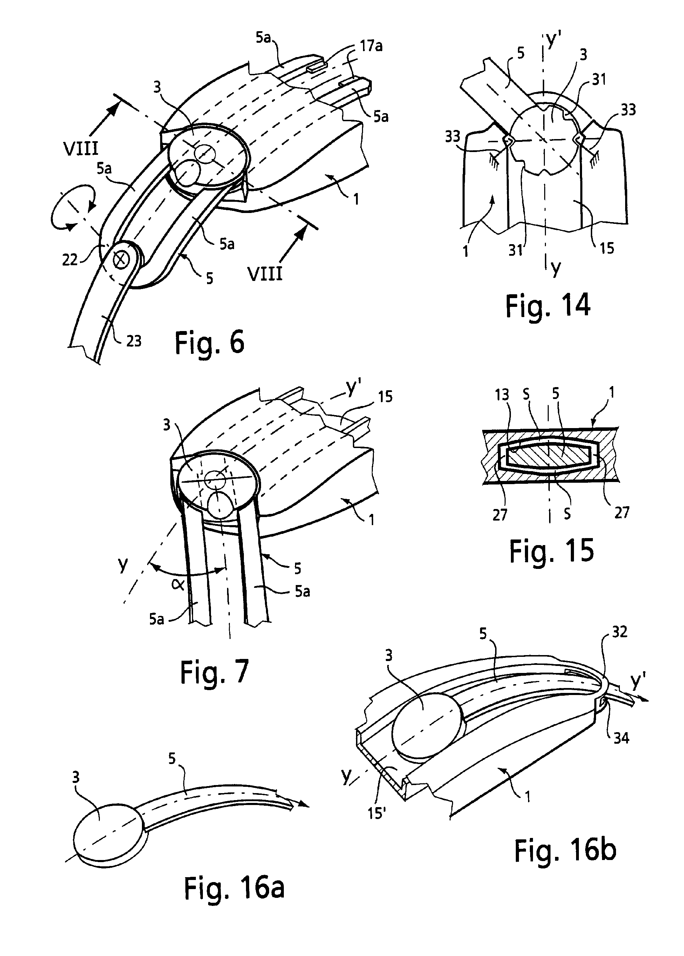

Dans un mode de mise en oeuvre particulièrement intéressant de l'invention le combiné comportera des moyens d'indexation angulaire de la branche ou du fourneau par rapport au boîtier 1. A cet effet, ainsi que représenté sur la figure 14, l'élément rotatif 3 est pourvu, sur sa périphérie, d'encoches 31 qui sont destinées à recevoir les extrémités d'éléments élastiques 33 qui sont par exemple constitués de lames métalliques. Il est ainsi possible, en fonction du nombre d'encoches 31 et du positionnement de celles-ci, de prédéfinir une série de positions stables de la branche 5 de part et d'autre de l'axe longitudinal yy' du boîtier 1.

Une telle indexation pourra également être réalisée par tout autre moyen et notamment en formant les encoches sur la face inférieure de l'élément rotatif 3, voire même sur une partie interne de la branche 5. Elles pourront également être formées sur le boîtier 1, les éléments ressorts étant alors disposés sur l'élément rotatif 3.

Bien entendu les branches et leurs logements associés pourront avoir des sections droites très diverses. Cette section droite pourra être circulaire ou par exemple être formée de deux arcs de cercle S en partie supérieure et inférieure et de deux flancs latéraux verticaux 27, ainsi que représenté sur la figure 15.

Dans la variante de mise en oeuvre représentée sur les figures 16a et 16b l'extrémité interne de la branche 5 est solidaire d'un élément de rotation constitué d'une pastille cylindrique 3, et la partie supérieure du boîtier 1 se termine par une paroi arrondie 32 qui est percée d'une fente 34 autorisant le passage de la branche 5. L'intérieur du boîtier 1 est creusé d'une rainure 15', dont la largeur est égale au diamètre de l'élément de rotation 3, et qui permet à ce dernier de coulisser dans le boîtier 1 et de pouvoir occuper une position rétractée et une position sortie. La largeur de la fente 34 est suffisante pour autoriser une rotation de la branche 5, lorsqu'elle est en position sortie, d'environ 45° de part et d'autre de l'axe longitudinal yy' du boîtier 1. Dans ce mode de mise en oeuvre la forme arrondie de la paroi 32 lui permet d'assurer un bon guidage de l'élément de rotation 3 au cours de son mouvement de rotation.

## Revendications

1. Combiné, notamment téléphonique, du type comprenant un boîtier (1) et un élément de maintien (30) relié à celui-ci par au moins une branche (5,5') escamotable par coulissement, **caractérisé en ce que** l'une des extrémités du boîtier (1) comporte un élément de rotation cylindrique (3), qui contrôle la rotation de ladite branche (5,5'), par rapport au boîtier (1) autour de son axe principal (zz').

2. Combiné suivant la revendication 1 **caractérisé en ce que** la branche (5,5') est montée à coulissement par rapport à l'élément de rotation (3).

3. Combiné suivant l'une des revendications précédentes **caractérisé en ce que** la branche (5) est montée à coulissement dans l'élément de rotation (3).

4. Combiné suivant l'une des revendications 1 à 3 **caractérisé en ce que** la branche (5,5') est montée à rotation par rapport à l'élément de rotation (3).

5. Combiné suivant la revendication 1 **caractérisé en ce que** la branche (5') est montée à coulissement dans une branche réceptrice (26,30).

6. Combiné suivant la revendication 1 **caractérisé en ce que** la branche réceptrice (26) est solidaire de l'élément de rotation (3).

7. Combiné suivant l'une des revendications précédentes **caractérisé en ce que** l'extrémité libre de la branche (5) est reliée à une autre branche (5') par l'intermédiaire de moyens d'articulation (28).

8. Combiné suivant la revendication 7 **caractérisé en ce que** les moyens d'articulation sont tels que les branches (5,5') sont susceptibles d'occuper une position de repos dans laquelle elles sont appliquées l'une contre l'autre.

9. Combiné suivant l'une quelconques des revendications 6 ou 7 **caractérisé en ce que** cette autre branche est elle-même montée à coulissement dans un fourreau solidaire de l'élément de maintien.

10. Combiné suivant l'une des revendications précédentes **caractérisé en ce que** la branche (5) est montée à coulissement dans le boîtier (1).

11. Combiné suivant l'une des revendications précédentes **caractérisé en ce que** l'élément de rotation (3) est monté à rotation autour d'un axe physique (7) solidaire du boîtier (1).

12. Combiné suivant l'une des quelconques des revendications 1 à 10 **caractérisé en ce que** l'élément de rotation (3) est guidé en rotation par des éléments de guidage (18-19, 20-21) disposés en périphérie de celui-ci.

13. Combiné suivant la revendication 10 **caractérisé en ce que** le boîtier est creusé d'un évidement longitudinal (15) destiné à recevoir la branche (5) lors de son introduction dans le boîtier (1), le rayon de courbure (r) de la branche et celui de cet évidement (15) ayant des valeurs différentes, de façon que la branche (5) subisse un effort de courbure lors de son introduction et lors de sa sortie de cet évidement.

14. Combiné suivant l'une des revendications précédentes **caractérisé en ce qu'**au moins l'une de ses branches est formée de deux éléments parallèles.

15. Combiné suivant l'une des revendications précédentes **caractérisé en ce que** l'élément de rotation (3) est pourvu de moyens d'indexation de sa position en rotation.
